## Europäisches Patentamt

(19) **European Patent Office**

**Office européen des brevets**

(11) Publication number: **0 253 632**
**A2**

(12) # EUROPEAN PATENT APPLICATION

(21) Application number: **87306226.9**

(22) Date of filing: **14.07.87**

(51) Int. Cl.⁴: **B 60 J 7/043**

(30) Priority: **14.07.86 ZA 865242**

(43) Date of publication of application:
**20.01.88 Bulletin 88/03**

(84) Designated Contracting States: **BE DE FR GB NL**

(71) Applicant: **CARVALETTE SERVICES AFRICA (PROPRIETARY) LIMITED**
**87 Twist Street cnr Kapteijn Street**
**Hillbrow Johannesburg Transvaal (ZA)**

(72) Inventor: **Davis, Bender Alfred**
**Green Lawns, Riverside Rd. Athol Extension 1**
**Sandton Transvaal (SA)**

(74) Representative: **Charlton, Peter John et al**
**Elkington and Fife High Holborn House 52/54 High Holborn**
**London WC1V 6SH (GB)**

(54) **Sun roof for motor vehicle.**

(57) A sun roof for a motor vehicle comprising a frame 6 adapted to be located against the vehicle roof 2 so as to surround an aperture 5 cut in the vehicle roof, the frame having a face 9 which bears on the underside of the vehicle roof when thus located, the frame being shaped so as to receive fastening means 12 passing through the vehicle roof from the upper side thereof in order to secure the frame to the vehicle roof, the frame having means for trapping a sealing member 18 which when thus trapped provides a seal for a panel 3 located over the aperture in the vehicle roof.

FIG 1

EP 0 253 632 A2

Bundesdruckerei Berlin

**Description**

This invention relates to a sun roof for a motor vehicle.

A sun roof for a motor vehicle comprises a panel mounted over an opening in the roof of the vehicle. The panel may be slidably mounted on the roof or it may be pivotally mounted thereon. The opening in the roof of the vehicle is defined by a frame assembly secured to the roof and surrounding an aperture which is cut therein. A known frame assembly of this kind comprises an upper frame member and a lower frame member secured together by means of screws and serving to clasp the edges of the roof metal which define the aperture in the roof. Known frame assemblies of this kind may include a third frame member which is attached to the lower frame member to secure the hood liner located on the interior of the vehicle roof.

The arrangement of the frame assembly of a sun roof of the above kind is relatively complicated and expensive, involving as it does the use of a plurality of frame members.

It is accordingly an object of the invention to provide an improved sun roof in which the abovementioned disadvantage is sought to be overcome.

A sun roof for a motor vehicle according to the invention comprises a frame adapted to be located against the vehicle roof so as to surround an aperture cut in the vehicle roof, the frame having a face which bears on the underside of the vehicle roof when thus located, the frame being shaped so as to receive fastening means passing through the vehicle roof from the upper side thereof in order to secure the frame to the vehicle roof, the frame having means for trapping a sealing member which when thus trapped provides a seal for a panel located over the aperture in the vehicle roof.

The frame may comprise, in cross-section, a body having upper and lower spaced parallel flanges extending transversely from the body and defining with the body a peripheral channel for trapping the sealing member. The upper flange may form part of the face of the frame bearing on the underside of the vehicle roof. The body of the frame may have an upwardly directed channel formed therein adapted to receive the fastening means, such as rivets, passed through holes in the vehicle roof from the upper side thereof.

At its lower end the body of the frame may have a transverse flange directed oppositely to the upper and lower flanges referred to above and defining with the underside of the vehicle roof a recess for receiving the edge of a hard hood liner cladding the underside of the vehicle roof. The body of the frame may also have a groove formed therein adapted to hold a rubber bead which may serve to clasp a flexible roof cladding material on the underside of the vehicle roof.

The sealing member preferably has a transverse tongue formed integrally therewith and adapted to overlie and seal the upper side of the vehicle roof in the zone containing the fastening means securing the frame to the roof.

A preferred embodiment of the invention will now be described by way of example with reference to the accompanying drawings in which;

Figure 1 illustrates a sun roof according to the invention;

Figures 2a and 2b illustrate parts of the sun roof of Figure 1 in exploded and assembled form respectively;

Figure 3a and 3b are sections through parts of the sun roof of Figure 1 in exploded and assembled form respectively;

Figure 4 is a view similar to Figure 3b, in which an additional element is provided; and

Figures 5 and 6 illustrate a sun roof installed with different kinds of roof cladding.

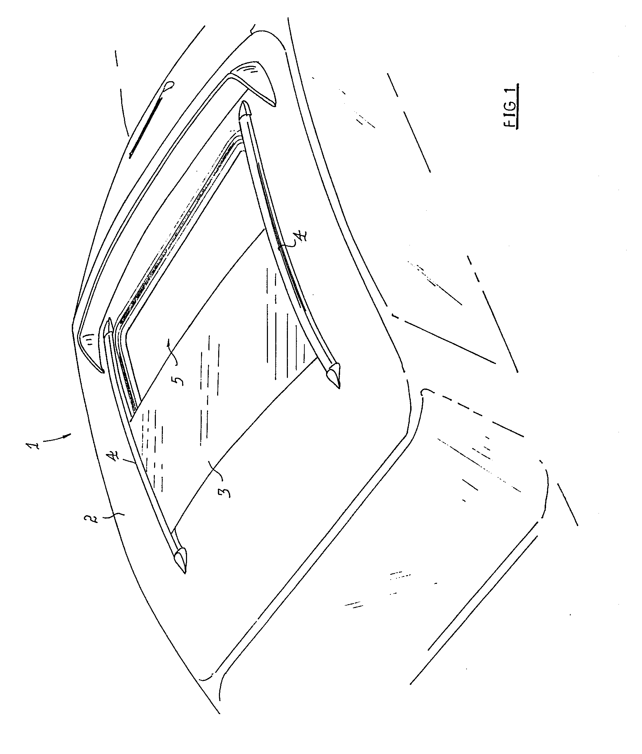

With reference to Figure 1, a sun roof 1 is shown installed in the roof 2 of a motor vehicle. In this embodiment of the invention the sun roof comprises a sliding sun roof panel 3 mounted between a pair of opposed tracks 4 secured to the vehicle roof 2 on opposite sides of an aperture 5 in the roof. The panel 3 is slidable over the aperture to open and close it.

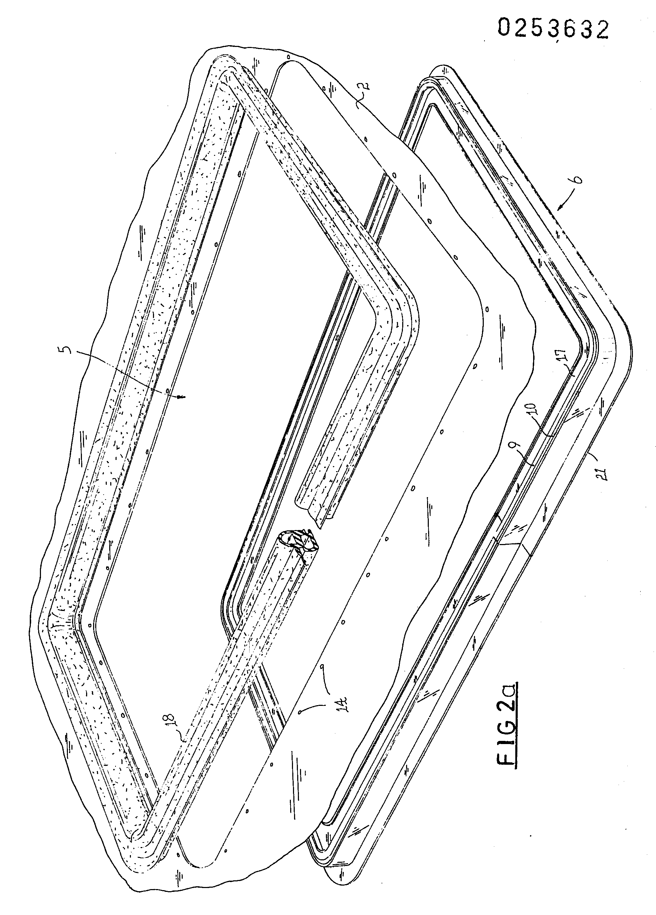

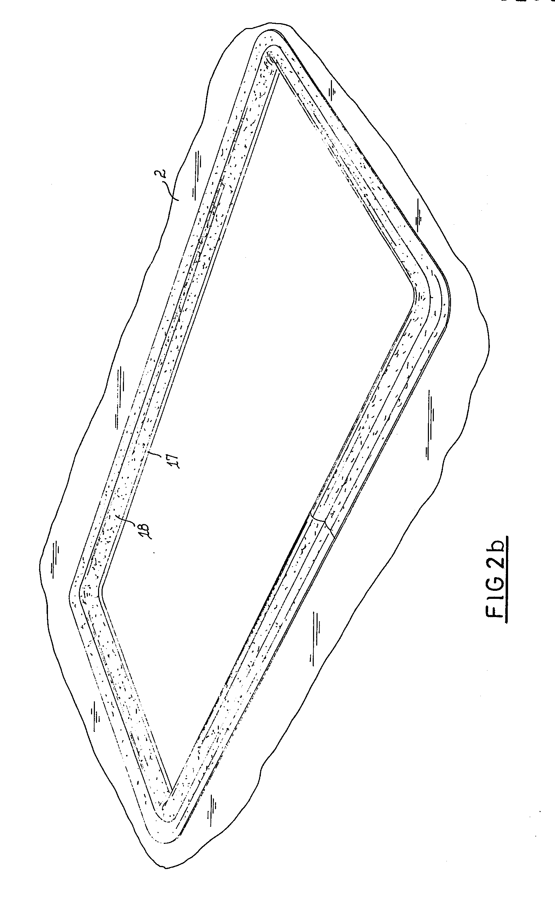

With reference to Figures 2 to 6, the sun roof 1 comprises a frame 6 located against the underside of the vehicle roof and surrounding the aperture 5. The frame 6 comprises a body 8 having a face 9 at its upper end which bears on the underside of the vehicle roof. The face 9 is interrupted by a channel 10 formed in the body 8. The channel 10 serves to receive rivets 12 passed through holes 14 formed in the vehicle roof. The rivets 12 are passed through the holes 14 from the upper side of the roof to secure the frame 6 to the vehicle roof. In place of rivets, self tapping screws may be used. The holes 14 are drilled a pre-determined distance from the edge of the aperture 5 in the roof so that they align with the channel 10. The spacing between the holes 14 is therefore not of critical importance. In this way it is a relatively simple task to mount the frame on the vehicle roof. The channel 10 has serrations 10a formed therein to provide a better grip for the rivets 12.

The frame 6 in cross-section has a pair of inwardly directed parallel flanges 16, 17 spaced from one another and extending transversely from the body 8 of the frame. The flanges 16, 17 define with the body 8 a peripheral channel which serves to trap a sealing member 18 therein. When the sealing member 18 is thus trapped it provides a seal for the roof panel 3 of the sun roof. The sealing member 18 has a lateral tongue 19 formed integrally therewith which overlies and seals the upper surface of the roof 2, covering the rivets 12. A suitable adhesive may be used to perfect this seal.

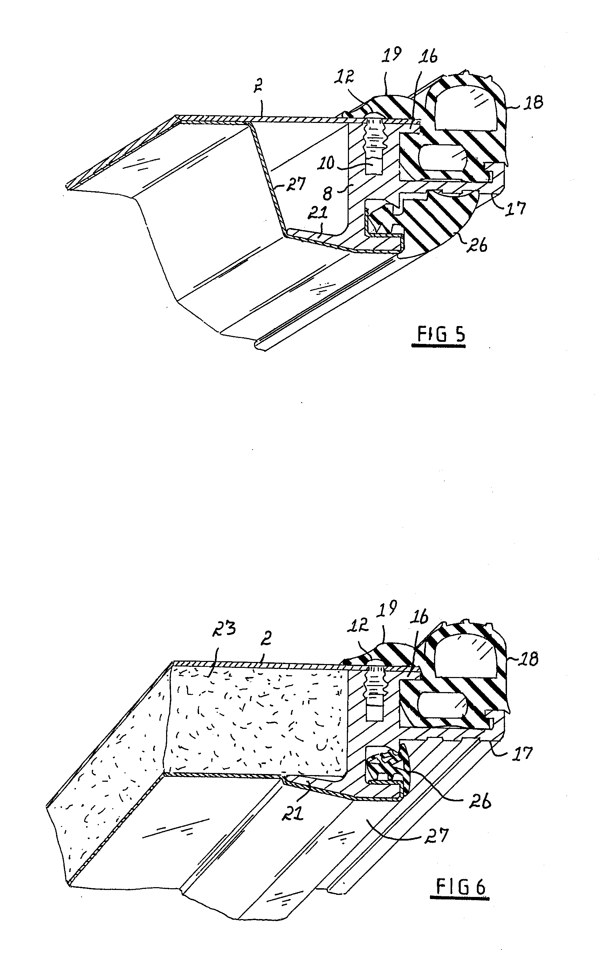

At the lower end of the body 8 of the frame 6 a transverse flange 21 is provided extending in an opposite direction to the flanges 16, 17. The flange 21 forms with the body part 8 and the underside of the vehicle roof 2 a recess for receiving the edge of a hard roof liner 23 provided on the underside of the vehicle roof (Figure 6). Towards its lower end the body 8 of the frame 6 has a groove 25 formed therein. The groove 25 is formed in the same side of the body 8 and is directed in the same direction as the channel defined by the flanges 16, 17. The groove 25 is adapted to hold a rubber bead 26 which serves to clasp roof cladding material 27 covering the hood liner 23. In the absence of the hard hood liner 23, the cladding material 27 can simply be extended from the underside of the roof 2 over the flange 21 to the groove 25 (Figure 5). Two different shapes of rubber bead 26 are shown in Figures 5 and 6 respectively.

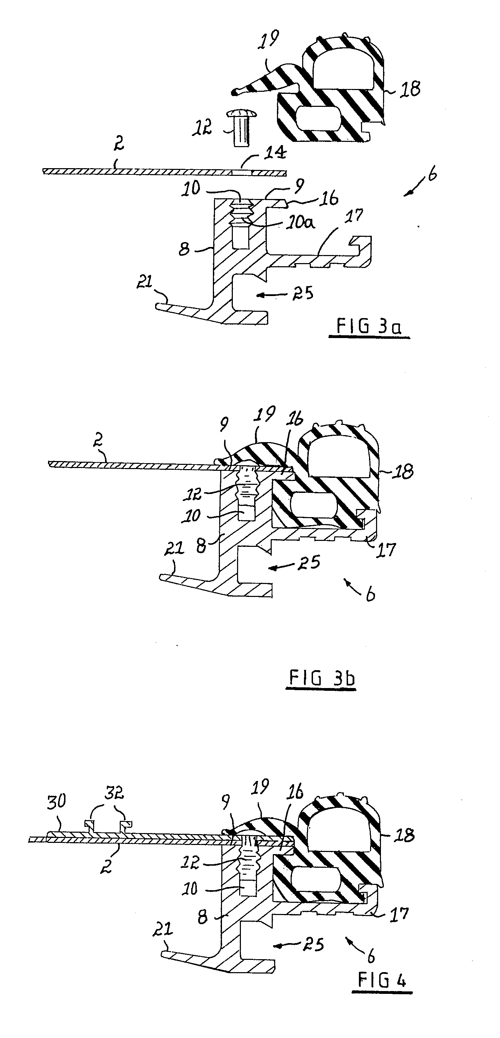

In Figure 4 the rivets 12 securing the frame 6 of the sun roof to the vehicle roof also serve to secure a rail element 30 on the upper side of the roof 2. The rail element 30 may be used to hold the tracks 4 of the sun roof in position on the upper side of the roof. For this purpose the rail element 30 may have formations 32 provided thereon which permits the tracks 4 to be slid lengthwise into position on the vehicle roof.

Thus the invention provides a sun roof of relatively simple construction which employs only a single frame surrounding the aperture in the vehicle roof.

Many other embodiments of the invention may be made differing in matters of detail only from that described above and without departing from the scope of the invention as defined in the appended claims.

## Claims

1. A sun roof for a motor vehicle comprising a frame adapted to be located against the vehicle roof so as to surround an aperture cut in the vehicle roof, the frame having a face which bears on the underside of the vehicle roof when thus located, the frame being shaped so as to receive fastening means passing through the vehicle roof from the upper side thereof in order to secure the frame to the vehicle roof, the frame having means for trapping a sealing member which when thus trapped provides a seal for a panel located over the aperture in the vehicle roof.

2. A sun roof as claimed in claim 1 in which the frame comprises, in cross-section, a body having upper and lower spaced parallel flanges extending transversely from the body and defining with the body a peripheral channel for trapping the sealing member.

3. A sun roof as claimed in claim 2 in which the upper flange forms part of the face of the frame bearing on the underside of the vehicle roof.

4. A sun roof as claimed in claim 2 or claim 3 in which the body of the frame has an upwardly directed channel formed therein adapted to receive the fastening means passed through holes in the vehicle roof from the upper side thereof.

5. A sun roof as claimed in claim 4 in which the fastening means comprise rivets or screws.

6. A sun roof as claimed in any one of claims 2 to 5 in which the body of the frame at its lower end has a transverse flange directed oppositely to the upper and lower flange of the frame and defining with the underside of the vehicle roof a recess for receiving the edge of a hard hood liner cladding the underside of the vehicle roof.

7. A sun roof as claimed in any one of claims 2 to 6 in which the body of the frame has a groove formed therein adapted to hold a rubber bead which serves to clasp a flexible roof cladding material on the underside of the vehicle roof.

8. A sun roof as claimed in claim 7 insofar as it depends on claim 2 in which the groove is located on the same side of the body and is directed in the same direction as the channel for trapping the sealing member.

9. A sun roof as claimed in any one of the preceding claims in which the sealing member has a transverse tongue formed integrally therewith and adapted to overlie and seal the upper side of the vehicle roof in the zone containing the fastening means securing the frame to the roof.

10. A sun roof for a motor vehicle comprising a frame adapted to be located against the vehicle roof so as to surround an aperture cut in the vehicle roof, a panel adapted to overlie the aperture and a sealing member adapted to provide a seal between the panel and the roof, the frame having a face which bears on the underside of the vehicle roof when thus located, the frame being shaped so as to receive fastening means passing through the vehicle roof from the upper side thereof in order to secure the frame to the vehicle roof, the frame having means for trapping the sealing member.

11. A sun roof as claimed in claim 10 including a rubber bead receivable in a groove formed in the frame and which serves to clasp a flexible roof cladding material on the underside of the vehicle roof.

FIG 1

FIG 2a

FIG 2b

18

17

2

0253632

0253632

FIG 3a

FIG 3b

FIG 4

0253632

FIG 5

FIG 6